# EUROPEAN PATENT APPLICATION

(11) **EP 3 816 256 A1**
(43) Date of publication of application: **05.05.2021**
(21) Application number: 19824516.9
(22) Date of filing: 21.06.2019
(51) Int. Cl.: C09K 3/00, C08K 5/101, C08L 83/05, C08L 83/06, C08L 83/07

(54) **ORGANO-POLYSILOXANE COMPOSITION FOR USE IN RELEASE PAPER OR RELEASE FILM**

(30) Priority: 28.06.2018 JP 2018122597
(71) Applicant: SHIN-ETSU CHEMICAL CO., LTD., Tokyo 100-0004 (JP)
(72) Inventor: IHARA Toshiaki, Annaka-shi, Gunma 379-0224 (JP); KOBAYASHI Ataru, Annaka-shi, Gunma 379-0224 (JP); TOYOSHIMA Takeharu, Annaka-shi, Gunma 379-0224 (JP)
(74) Representative: Mewburn Ellis LLP
(86) International application number: PCT/JP2019/024680
(87) International publication number: WO 2020/004254

(57) **Abstract**

Provided is an organo-polysiloxane composition for use in release paper or release film, capable of forming a hardened coat having a low release force. The invention is an organo-polysiloxane composition for use in release paper or release film, containing the components (A) to (D). (A) An organo-polysiloxane having two or more silicon atom-bound alkenyl groups within one molecule: 100 parts by mass. (B) An organo-hydrogen polysiloxane having at least an average of two or more silicon atom-bound hydrogen atoms (Si-H groups) within one molecule: an amount such that the number of moles of the Si-H groups is equal to 1 to 5 times that of the number of moles of the alkenyl groups within the (A) component. (C) A compound having one or more (meth)acrylic groups within one molecule, and whereof the molecular weight is 72 to 1,000: 0.01 to 3 parts by mass with respect to 100 parts by mass of the (A) component. (D) A platinum-group metal catalyst: 60 to 300 ppm in platinum-group metal mass equivalents with respect to the total amount of the components (A) to (D).

## Description

### TECHNICAL FIELD

The present invention relates to an organopolysiloxane composition having a low release force. More particularly, the invention relates to, in the production of a release sheet such as release paper or release film that is produced by roll-coating an organopolysiloxane composition onto a sheet-like substrate such as paper or plastic and curing the composition at an elevated temperature, an organopolysiloxane composition for release paper or release film which enables an adhesive face to be easily peeled off at a low force.

### BACKGROUND ART

To prevent bonding and fixing between a sheet-like substrate such as paper or plastic and a pressure-sensitive adhesive material, the practice up until now has been to impart release properties by forming a cured coating of an organopolysiloxane composition on the substrate surface. The following methods of forming a cured coating of organopolysiloxane on a substrate surface are known.
(1) The method of forming a release coating by addition-reacting an alkenyl group-containing organopolysiloxane with an organohydrogenpolysiloxane using a platinum compound as the catalyst (Patent Document 1: JP-A S47-32072).
(2) The method of forming a release coating by condensation-reacting an organopolysiloxane having functional groups such as hydroxyl groups or alkoxy groups using an organometallic salt as the catalyst (Patent Document 2: JP-B S35-13709).
(3) The method of forming a release coating by using ultraviolet radiation or electron beams to induce the radical polymerization of an acrylic group-containing organopolysiloxane with a photoreaction initiator (Patent Document 3: JP-A S54-162787).)

Of these, method (1) of forming, via an addition reaction using a platinum catalyst, a release coating which, among those of (1) to (3) above, has an excellent curability and can accommodate various release property requirements ranging from low-speed release to high-speed release, is widely used.

Recently, in cases where an adhesive having a high tack strength is used and cases that involve a step for mechanically and automatically peeling away an adhesive face, there has begun to arise a need for release paper having a lower release force than in the past.

Methods for lowering the release force that have been reported in the art include methods that include phenyl group-containing organopolysiloxanes (Patent Document 4: JP No. 2640486; Patent Document 5: JP No. 2519571), and a method that includes a compound obtained by grafting an organopolysiloxane chain onto an acrylic backbone (Patent Document 6: JP-A 2016-79301).

In this prior art, a phenyl group-containing organopolysiloxane or a siloxane-grafted acrylic resin migrates to the release paper surface and deposits on the pressure-sensitive adhesive surface, thereby enabling the release paper to easily peel off. However, these methods require that a certain amount of a special siloxane compound be included, and so there exists a desire for art which includes a small amount of a less expensive compound.

### PRIOR ART DOCUMENTS

### PATENT DOCUMENTS

Patent Document 1: JP-A S47-32072
Patent Document 2: JP-B S35-13709
Patent Document 3: JP-A S54-162787
Patent Document 4: JP No. 2640486
Patent Document 5: JP No. 2519571
Patent Document 6: JP-A 2016-79301

### SUMMARY OF THE INVENTION

### TECHNICAL PROBLEM

The present invention was arrived at in view of the above circumstances. The object of the invention is to provide an organopolysiloxane composition for release paper or release film, which composition is capable of forming a cured coating having a low release force.

### SOLUTION TO THE PROBLEM

The inventors have conducted extensive investigations in order to achieve the above object. As a result, they have found that by including (C) a compound having at least one (meth)acrylic group per molecule and a molecular weight of from 71 to 1,000 in an addition reaction-curable organopolysiloxane composition, the above problem can be resolved with a smaller amount of addition. This discovery ultimately led to the present invention.

Accordingly, this invention provides the following organopolysiloxane composition for release paper or release film (which composition is sometimes referred to below simply as "the organopolysiloxane composition").
1. An organopolysiloxane composition for release paper or release film, which composition includes components (A) to (D) below:
   (A) 100 parts by weight of an organopolysiloxane having at least two silicon-bonded alkenyl groups per molecule;
   (B) an organohydrogenpolysiloxane having at least two silicon-bonded hydrogen atoms (Si-H groups) per molecule, in an amount corresponding to from 1 to 5 moles of Si-H groups per mole of alkenyl groups in component (A);
   (C) a compound having at least one (meth)acrylic group per molecule and a molecular weight of from 72 to 1,000, in an amount of from 0.01 to 3 parts by weight per 100 parts by weight of component (A); and
   (D) a platinum group metal catalyst in an amount, based on the platinum group metal weight, of from 60 to 300 ppm of the total weight of components (A) to (D).
2. The organopolysiloxane composition for release paper or release film of 1 above which further includes (E) an addition reaction regulator in an amount of from 0.01 to 5 parts by weight per 100 parts by weight of component (A).
3. The organopolysiloxane composition for release paper or release film of 1 or 2 above, wherein component (C) is an organopolysiloxane having at least one (meth)acrylic group per molecule and a molecular weight of from 186 to 1,000.
4. The organopolysiloxane composition for release paper or release film of 1 or 2 above, wherein component (C) is a compound having one (meth)acrylic group per molecule and a molecular weight of from 72 to 300.
5. The organopolysiloxane composition for release paper or release film of 1 or 2 above, wherein component (C) is a compound having a (meth)acrylic group and an epoxy group.

### ADVANTAGEOUS EFFECTS OF THE INVENTION

This invention enables an organopolysiloxane composition for release paper or release film to be provided which is capable of forming a cured coating that has a low release force even when it contains little easy-release additive.

### DESCRIPTION OF EMBODIMENTS

The invention is described in detail below.

### Component (A)

Component (A) of the invention is an organopolysiloxane having at least two silicon-bonded alkenyl groups per molecule. One such organopolysiloxane may be used alone or two or more may be used in suitable combination. Examples of component (A) include organopolysiloxanes having a structure represented by formula (1) below.

M_{α}M^{Vi}_{β}D_{γ}D^{Vi}_{δ}T_{ε}T^{Vi}_{ζ}Q_{η} (1)

(wherein M stands for R₃SiO_{1/2}, M^{Vi} stands for R₂PSiO_{1/2}, D stands for R₂SiO₂₂, D^{Vi} stands for RPSiO_{2/2}, T stands for RSiO_{3/2}, T^{Vi} stands for PSiO_{3/2}, and Q stands for SiO_{4/2}; each R is independently a substituted or unsubstituted monovalent hydrocarbon group of 1 to 12 carbon atoms which has no aliphatic unsaturated bonds; P is an alkenyl group of the formula -(CH₂)ₙ-CH=CH₂ (where n is 0 or an integer from 1 to 6); α, β, δ and ζ are each independently 0 or a positive number, with the proviso that β, δ and ζ are not at the same time 0 and 2 ≤ β+δ+ζ ≤ 500; and γ is from 10 to 2,700, ε is from 0 to 200 and η is from 0 to 100).

In formula (1), each R is independently a substituted or unsubstituted monovalent hydrocarbon group of 1 to 12 carbon atoms which has no aliphatic unsaturated bonds, the number of carbon atoms being preferably from 1 to 10, and more preferably from 1 to 8. Specific examples include alkyl groups such as methyl, ethyl, propyl, butyl, pentyl, hexyl, octyl, decyl and dodecyl groups; cycloalkyl groups such as the cyclohexyl group; aryl groups such as phenyl, naphthyl and tolyl groups; aralkyl groups such as benzyl and phenethyl groups; and any of these groups in which a portion of the hydrogen atoms bonded to carbon atoms are substituted with halogen atoms, epoxy groups, amino groups, polyether groups, cyano groups, hydroxyl groups or the like. Of these, from the standpoint of the curability and to lower the release force of the resulting cured product, it is preferable for at least 80 mol% of the total number of R groups to be methyl groups.

P is an alkenyl group of the formula -(CH₂)ₙ-CH=CH₂ (wherein n is 0 or an integer from 1 to 6). Specific examples include vinyl, allyl, butenyl, propenyl, 5-hexenyl, octenyl and decenyl groups. Of these, a vinyl group is preferred.

The subscripts α, β, δ and ζ are each independently 0 or a positive number, provided that β, δ and ζ are not at the same time 0 and 2 ≤ β+δ+ζ ≤ 500. Preferably, 2 ≤ β+δ+ζ ≤ 200.

The subscript α is preferably 0 or from 1 to 100, β is preferably 0 or from 1 to 100, δ is preferably 0 or from 1 to 500, and ζ is preferably 0 or from 1 to 100.

The subscript γ is from 10 to 2,700, preferably from 10 to 2,000, and more preferably from 50 to 1,500. When γ is less than 10, at a coating rate of 200 m/min or more, the amount of mist generated may increase and the organopolysiloxane composition-coated surface may roughen. On the other hand, when γ is more than 2,700, the kinematic viscosity of the organopolysiloxane composition may become too high and the coatability may decrease, as a result of which the smoothness may worsen and differences in the coating weight from place to place may become large.

The subscript ε is from 0 to 200, preferably from 0 to 20, and more preferably from 0 to 10. The subscript η is from 0 to 100, preferably from 0 to 10, and more preferably from 0 to 5.

The vinyl value of component (A) is preferably from 0.001 to 0.7 mol/100 g, more preferably from 0.005 to 0.5 mol/100 g, and even more preferably from 0.01 to 0.1 mol/100 g. At a vinyl value less than 0.001 mol/10 g, there may be too few reaction sites and curing defects may arise. At a vinyl value greater than 0.7 mol/100 g, the crosslink density may become too high and the low-speed release force may rise.

The weight-average molecular weight of component (A) is preferably at least 800 and not more than 200,000, more preferably at least 800 and not more than 150,000, and even more preferably at least 150 and not more than 100,000. At a weight-average molecular weight for component (A) of less than 800, the wettability rises and the composition tends to spread too easily, as a result of which the coating weight on the substrate may be inadequate. Conversely, at above 200,000, wetting and spread may become difficult and the coating weight on the substrate may become uneven. In this invention, the weight-average molecular weight of component (A) is measured as the polystyrene-equivalent weight-average molecular weight by gel permeation chromatography (GPC) using toluene as the solvent.

Component (A) has a kinematic viscosity, as measured at 25°C using an Ostwald viscometer, of preferably from 7 to 3,000,000 mm²/s, more preferably from 10 to 10,000 mm²/s, and even more preferably from 20 to 5,000 mm²/s. At a kinematic viscosity below 7 mm²/s, the kinematic viscosity of the overall composition becomes low and may result in an insufficient coating weight.

Component (A) is exemplified by siloxanes having alkenyl groups at both ends, siloxanes having pendant alkenyl groups, siloxanes having an alkenyl group at one end and pendant alkenyl groups, siloxanes having alkenyl groups at both ends and pendant alkenyl groups, and siloxanes having alkenyl groups at branched ends.

Examples represented in terms of the structural formula include M^{Vi}₂D_{γ}, M₂D_{γ}D^{Vi}_{δ}, M^{Vi}₃D_{γ}T₁, M^{Vi}₄D_{γ}T₂, M^{Vi}₂D_{γ}D^{Vi}_{δ}, M^{Vi}₂D_{γ}Q₁, M_{α}D_{γ}D^{Vi}_{δ}T^{Vi}_{ζ} (M, M^{Vi}, D, D^{Vi}, T, T^{Vi}, Q, γ, δ, and ζ being the same as above; the same applies below). More specific structural examples include M^{Vi}₂D₁₅₅, M^{Vi}₂D₁₀₀, M₂D₉₇D^{Vi}₃, M₂D₂₆D^{Vi}₄, M₂D₉₆D^{Vi}₄, M₂D₉₅D^{Vi}₅, M^{Vi} ₃D₁₀₀T₁, M^{Vi}₄D₁₀₀T₂, M^{Vi}₂D₉₇D^{Vi}1, M^{Vi}₂D₉₅D^{Vi}₃, M₃D₉₃D^{Vi}₃T^{Vi}₁, M^{Vi}₂D₂₀₀₀ and M₂D₁₀₀₀D ^{Vi}₂₀.

### Component (B)

Component (B) is an organohydrogenpolysiloxane having two or more silicon-bonded hydrogen atoms (Si-H groups) per molecule. One such organohydrogenpolysiloxane may be used alone or two or more may be used in suitable combination. The two or more silicon-bonded hydrogen atoms may be an average. The number of silicon-bonded hydrogen atoms (Si-H groups) per molecule is preferably from 3 to 100, and more preferably from 10 to 100. A crosslinked organopolysiloxane is formed by addition reactions between Si-H groups on this organohydrogenpolysiloxane and alkenyl groups on component (A). The Si-H group content is preferably from 0.001 to 3.5 mol/100 g, more preferably from 0.01 to 2.5 mol/100 g, and even more preferably from 0.02 to 2.0 mol/100 g. When the Si-H group content is too small, the curability and adherence may worsen; when it is too high, the release force may tighten.

The organohydrogensiloxane of component (B) preferably has the structure represented in formula (2) below.

M_{ο}M^{H}_{π}D_{ρ}D^{H}_{σ}T_{τ}T^{H}_{ϕ}Q_{χ} (2)

(wherein M stands for R'₃SiO_{1/2}, M^{H} stands for R'₂HSiO_{1/2}, D stands for R'₂SiO_{2/2}, D^{H} stands for R'HSiO_{2/2}, T stands for R'SiO_{3/2}, T^{H} stands for HSiO_{3/2}, and Q stands for SiO_{4/2}; each R' is independently a substituted or unsubstituted monovalent hydrocarbon group of 1 to 12 carbon atoms which has no aliphatic unsaturated bonds; ο, π, ρ and τ are each independently 0 or a positive number; σ is from 0 to 100, ϕ is from 0 to 10, and χ is from 0 to 10; and π, σ and ϕ are not all 0 at the same time, with 2 ≤ π+σ+ϕ ≤ 100).

In formula (2), R' is exemplified by the same groups as R in formula (1). Of these groups, alkyl groups having from 1 to 8 carbon atoms are preferred.

The subscripts ο, π, ρ and τ in formula (2) are each independently 0 or a positive number, with o being preferably 0 or from 1 to 10, π being preferably 0 or from 1 to 10, p being preferably 0 or from 1 to 100 and τ being preferably 0 or from 1 to 10. Also, σ is from 0 to 100, preferably from 2 to 100, and more preferably from 10 to 80; ϕ is from 0 to 10, and preferably from 0 to 5; and χ is from 0 to 10, and preferably from 0 to 5. Additionally, π, σ and ϕ are not all 0 at the same time, with π+σ+ϕ being from 2 to 100, and preferably from 10 to 80.

The organohydrogenpolysiloxane serving as component (B) is exemplified by siloxanes having hydrogensilyl groups at both ends, siloxanes having pendant hydrogensilyl groups, siloxanes having a hydrogensilyl group at one end and pendant hydrogensilyl groups, and siloxanes having hydrogensilyl groups at both ends and pendant hydrogensilyl groups.

Examples represented in terms of the structural formula include M^{H}₂D_{ρ}, M₂D^{H}_{σ}, M₂D_{ρ}D^{H}_{σ}, M^{H}₂D_{ρ}D^{H}_{σ}, M^{H}₃D_{ρ'}T₁, M^{H}₄D_{ρ}T₂ and MₒD_{ρ}D^{H}_{σ}T^{H}_{ϕ} (M, M_{H}, D, D^{H}, T, T^{H}, Q, ο, ρ, σ and ϕ being the same as above; the same applies below). More specific structural examples include M^{H}₂D₁₀, M^{H}₂D₁₀₀, M₂D₂₇D^{H}₃, M₂D₉₇D^{H}3, M₂D₂₆D^{H}₄, M₂D₂₅D^{H}₅, M₂D₂₄D^{H}₆, M₂D₉₆D^{H}₄, M₂D₉₅D^{H}₅, M^{H}₃D₁₀₀T₁, M^{H}₄D₁₀₀T₂, M^{H}₂D₉₇D^{H}₁, M^{H}₂D₉₅D^{H}₃ and M₃D₉₃D^{H}₃T^{H}₁.

The weight-average molecular weight of component (B) is preferably from 194 to 10,000, and more preferably from 874 to 5,000. When the weight-average molecular weight of component (B) is too small, the adherence may greatly worsen; when it is too large, the reactivity may worsen, the curability may decline, and a decrease in the subsequent adhesion ratio and a rise in the release force due to undercure may be observed. In this invention, the weight-average molecular weight of component (B) is measured as a polystyrene-equivalent weight-average molecular weight by gel permeation chromatograph (GPC) using toluene as the solvent.

Component (B) has a kinematic viscosity at 25°C, as measured with an Ostwald viscometer, of preferably from 2 to 500 mm²/s, more preferably from 2 to 300 mm²/s, and even more preferably from 5 to 200 mm²/s. At a kinematic viscosity at 25°C below 2 mm²/s, the reactivity is good because of the low molecular weight, but adherence to the substrate may worsen. On the other hand, at more than 500 mm²/s, the reactivity may worsen, the durability may decline, and a decrease in the subsequent adhesion ratio and an increase in the release force due to undercure may be observed.

The content of component (B) is an amount corresponding to from 1 to 5 moles, preferably from 1.2 to 3 moles, of Si-H groups per mole of alkenyl groups in component (A). An amount corresponding to from 1 to 5 moles, expressed in terms of the amount of Si-H functional groups, is equivalent to from 0.016 to 3.5 mol/100 g. When the component (B) content is too low, the curability and adherence may be inadequate; when it is too high, the amount of remaining Si-H groups rises, as a result of which the release force becomes high and, because the number of Si-H groups diminishes over time, the release force may decrease over time. Moreover, H/Vi (the ratio of Si-H groups in the composition to alkenyl groups in the composition) also is preferably the same as the above-indicated range.

### Component (C)

Component (C) of the invention is a compound having at least one (meth)acrylic group per molecule and a molecular weight of from 72 to 1,000. One such compound may be used alone or two or more may be used in suitable combination. The lower limit of the molecular weight is preferably at least 186. The upper limit is preferably 300 or less, and more preferably 250 or less. Also, component (C) is preferably a compound having no aliphatic unsaturated bonds other than (meth)acrylic groups. As used herein, "(meth)acrylic group" refers to acrylic and methacrylic groups. Of these, it is preferable for the compound to have an acrylic group.

(C-1) compounds other than organopolysiloxanes and (C-2) organopolysiloxanes are described separately below.

### (C-1) Compounds Other than Organopolysiloxanes

### (C-1-1)

These are compounds of general formula (3) below that have one (meth)acrylic group.

CH₂=CR¹COOR² (3)

(wherein R¹ is a hydrogen atom or methyl group; and R² is a hydrogen atom or an alkyl, aryl or aralkyl group of 1 to 20 carbon atoms which may have a branched or cyclic structure and may include an epoxy group, a urethane bond, an ether bond, an isocyanate bond or a hydroxyl group).

Specific examples of R² include methyl, ethyl, propyl, butyl, hexyl, cyclohexyl, phenyl, dicyclopentanyl, dicyclopentenyl, furfuryl, tetrahydrofurfuryl and tetrahydropyranyl groups, and also -CH2CH2-OH, -CH2CH(CH3)-OH and -CH2CH2-NCO. When R² has an epoxy group, examples include the following. Compounds having a (meth)acrylic group and an epoxy group may be oligomers.

Specific examples of compounds having one (meth)acrylic group and a molecular weight of from 72 to 300 include 2-ethylhexyl acrylate, 2-hydroxyethyl acrylate, acrylic acid, butyl acrylate, methyl acrylate and ethyl acrylate.

An example of a compound having a (meth)acrylic group and an epoxy group is 4-hydroxybutyl acrylate glycidyl ether.

### (C-1-2)

Specific examples of compounds having two (meth)acrylic groups and a molecular weight of from 200 to 1,000 include tetraethylene glycol diacrylate, nonaethylene glycol diacrylate, tetradecanyl ethylene glycol diacrylate, tricyclodecane dimethanol diacrylate, 1,10-decanediol diacrylate, 1,6-hexanediol diacrylate, 1,9-nonanediol diacrylate, dipropylene glycol diacrylate, heptapropylene glycol diacrylate and trimethylolpropane triacrylate.

### (C-2)

The organopolysiloxane is exemplified by cyclic siloxanes having the structure shown in formula (4) below and organopolysiloxanes having the structure shown in structural formula (5) below. Organopolysiloxanes having a molecular weight or weight-average molecular weight of from 186 to 1,000 are preferred. Also, organopolysiloxanes having from 3 to 6 (meth)acrylic group-bearing siloxane units are preferred, and organopolysiloxanes having no Si-H groups or alkenyl groups are preferred.
[Chem. 1]

D^{R³}ₐ (4)

Here, D^{R³} is R³R"SiO_{2/2}
[wherein R³ is CH₂=CR⁴COOR⁵- (R⁴ being a hydrogen atom or an alkyl or aryl group of 1 to 20 carbon atoms, and R⁵ being an alkylene group of 1 to 6 carbon atoms); each R" is independently a substituted or unsubstituted monovalent hydrocarbon group of 1 to 12 carbon atoms which has no aliphatic unsaturated bonds; and the subscript a is from 3 to 6].
[Chem. 2]

M^{R³}_{b}M_{c}D^{R3}_{d}D_{eT}^{R³}_{f}T_{g}Qₕ (5)

[wherein M, D, T and Q are the same as above,

[Chem. 3] M^{R³} is R³R"₂SiO_{1/2}, D^{R³} is R³R"SiO_{2/2}, T^{R³} is R³SiO_{3/2},

(where R³ is CH₂=CR⁴COOR⁵ (R⁴ being a hydrogen atom or an alkyl or aryl group of 1 to 20 carbon atoms, and R⁵ being an alkylene group of 1 to 6 carbon atoms); each R" is independently a substituted or unsubstituted monovalent hydrocarbon group of 1 to 12 carbon atoms which has no aliphatic unsaturated bonds; b is from 0 to 4; c is from 0 to 7 (with the proviso that b+c ≥ 2), d is from 0 to 4, e is from 0 to 11, f is from 0 to 3, g is from 0 to 5, h is from 0 to 5, and b+d+f are not 0)].

In formulas (4) and (5), R" is exemplified in the same way as R in formula (1). Examples of alkyl groups of 1 to 20 carbon atoms include methyl, ethyl, propyl, butyl, pentyl, hexyl, octyl, decyl and dodecyl groups. Examples of aryl groups of 1 to 20 carbon atoms include phenyl, naphthyl and tolyl groups.

Examples of compounds having the formula (5) structure include M^{A}₂, M^{A}₂D₃, M₂D^{A}₂D₂, M^{A}₄Q₁, T^{A}₂T₁(OCH₃)₅, M₆T^{A}₂T₂, M^{A}₃D₂T₁, M₃D^{A}₂T₁, M₃D₂T^{A}₁, M₃D^{A}₂T^{A}, M^{A}DM and M^{A}D₃M. Compounds having at least one terminal (meth)acrylic group on the molecular chain are preferred. M, D, T and Q in these formulas are the same as indicated above. As for M^{A}, D^{A} and T^{A}, in above formula (5), R³ = A, with A being CH₂=CHCOO(CH₂)₃-.

The molecular weight or weight-average molecular weight of component (C) is measured by Si-NMR. The instrument used for Si-NMR measurement may be, for example, the Win Lambda from JEOL, Ltd. The measurement method involves placing 1.5 g of sample and 3.5 g of d-chloroform in a Teflon® sample tube and thoroughly agitating, then setting the sample tube in the Si-NMR spectrometer and carrying out 600 runs. Also, in this invention, the weight-average molecular weight is used for (C-2) organopolysiloxanes having the structure shown in structural formula (5); in other cases, the molecular weight is used.

The content of component (C) per 100 parts by weight of component (A) is from 0.01 to 3 parts by weight, and preferably from 0.05 to 0.5 part by weight. At less than 0.01 part by weight, the release force-lowering effect may be inadequate. At more than 3 parts by weight, the migrating constituents may increase.

### Component (D)

Known catalysts that are employed as addition reaction catalysts may be used as the platinum group metal catalyst serving as component (D) in this invention. Examples of such platinum group metal catalysts include platinum catalysts, palladium catalysts, rhodium catalysts and ruthenium catalysts. Of these, the use of a platinum catalyst is especially preferred. Examples of this platinum catalyst include platinum compounds, complexes of platinum with vinyl siloxanes or the like, alcohol or aldehyde solutions of chloroplatinic acid, complex salts of chloroplatinic acid with various olefins, and complexes of chloroplatinic acid with vinyl siloxanes or the like.

The content of component (D) is the catalytic amount. Generally, in an organopolysiloxane composition for release paper or release film, the concentration of platinum group metal that is included for preparation of a cured coating is from 60 to 400 ppm in the organopolysiloxane composition for release paper or release film. In this invention, the platinum group metal catalyst is included in an amount, based on the platinum group metal weight, of from 60 to 300 ppm, preferably from 60 to 200 ppm, of the total weight of components (A) to (D).

### Component (E)

The addition reaction regulator (E) in this invention is an optionally included ingredient that regulates the catalytic activity of the platinum group metal catalyst. Exemplary addition reaction regulators include various types of organonitrogen compounds, organophosphorus compounds, acetylene compounds, oxime compounds and organochlorine compounds. Specific examples include acetylenic alcohols such as 1-ethynyl-1-cyclohexanol, 3-methyl-1-butyn-3-ol, 3,5-dimethyl-1-hexyn-3-ol, 3-methyl-1-penten-3-ol and phenylbutynol; acetylenic compounds such as 3-methyl-3-1-penten-1-yne and 3,5-dimethyl-1-hexyn-3-yne; reaction products of an acetylenic compound with an alkoxysilane, a siloxane or a hydrogensilane, such as 1,1-dimethylpropynyl oxide trimethylsilane; vinyl siloxanes such as cyclic tetra(methyl vinyl) siloxanes; and benzotriazole.

When component (E) is included, the content thereof per 100 parts by weight of component (A) is preferably from 0.01 to 5 parts by weight, and more preferably from 0.1 to 3 parts by weight.

### Production Method and Optional Ingredients

The organopolysiloxane composition of the invention can be obtained by mixing above components (A) to (D) and, where necessary, component (E) in given respective amounts. Ingredients normally included in organopolysiloxane compositions for release paper or release film may be included in the organopolysiloxane composition of the invention within ranges that do not detract from the advantageous effects of the invention. Even when diluted in an organic solvent, the organopolysiloxane composition does not undergo a decline in properties.

The organic solvent used is preferably an organic solvent (not including siloxane solvents) in which organopolysiloxanes are soluble, such as toluene, hexane, xylene and methyl ethyl ketone, or an organopolysiloxane (siloxane solvent), examples of which include low-viscosity cyclic siloxanes such as octamethyltetrasiloxane and decamethylpentasiloxane, linear siloxanes such as M₂Dₚ (M and D being the same as above; and p being a number from 0 to 200, preferably from 1 to 50), and branched-chain siloxanes such as M_{2+q}DₚT_{q} (M, D and T being the same as above; p being from 0 to 200, preferably from 1 to 50; and q being from 1 to 10, preferably from 1 to 3).

The amount of organic solvent used is preferably from 3 to 50 times, and more preferably from 8 to 30 times, the total weight of the organopolysiloxane of component (A) and the organohydrogenpolysiloxane of component (B).

Examples of optionally added ingredients include, for the purpose of imparting slip properties, high-molecular-weight linear organopolysiloxanes and, for the purpose of adjusting the release force, silicone resins having aryl groups, other silicone resins, silicas, and low-molecular-weight organopolysiloxanes having no silicon-bonded hydrogen atoms or alkenyl groups.

The organopolysiloxane composition of the invention has a kinematic viscosity, as measured at 25°C with an Ostwald viscometer, that is preferably 500 mm²/s or less, more preferably from 10 to 470 mm²/s, and even more preferably from 20 to 430 mm²/s. When the kinematic viscosity is too low, the coating weight may decrease; when it is too high, the coating weight may become uneven or a large amount of mist may be generated.

### Applications and Method of Use

The organopolysiloxane composition of the invention is heat-cured by a conventional method after being applied with a coating roll or the like onto a sheet-like substrate such as paper or plastic film. A cured silicone coating of the organopolysiloxane composition of the invention is thus formed on one side of the sheet-like substrate, and preferably used as a release sheet or the like. The plastic film is exemplified by films made of polyethylene, polypropylene or polyethylene terephthalate.

The coating weight of the organopolysiloxane composition should be an amount sufficient to form a cured silicone coating on the surface of the sheet-like substrate, such as from about 0.1 g/m² to about 5.0 g/m². Coating too large an amount may lead to a decrease in the release performance. The temperature during heat curing varies with the type of substrate and the coating weight. However, by heating at between 100°C and 200°C, preferably between 120°C and 180°C, for a period of from 1 to 60 seconds, preferably from 2 to 40 seconds, and more preferably from 2 to 30 seconds, a cured coating can be formed on the substrate.

### EXAMPLES

Examples according to the invention and Comparative Examples are given below to more concretely illustrate the invention, although the invention is not limited by these Examples. The molecular weights of component (C) below were determined by Si-NMR spectroscopy, and the kinematic viscosities are all values measured at 25°C using an Ostwald viscometer.

### Starting Materials

### Component (A)

### Methyl Vinyl Polysiloxane

A polysiloxane of the formula shown below in which both ends of the molecular chain are capped with dimethylvinylsiloxy groups and which, aside from both ends, consists entirely of (CH3)2SiO units and has a vinyl value of 0.0166 mol/100 g and a kinematic viscosity of 440 mm²/s.

{(CH₂=CH)(CH₃)₂SiO_{1/2}}₂{(CH₃)₂SiO}₁₅₅

### Component (B)

### Methyl Hydrogen Polysiloxane

A methyl hydrogen polysiloxane in which both ends of the molecular chain are capped with trimethylsiloxy groups and which, aside from both ends, consists entirely of (CH3)HSiO units and has a Si-H group content of 1.69 mol/100 g and a kinematic viscosity of 35 mm²/s.

### Component (C)

- Acrylic acid: CH2=CHCOOH; molecular weight, 72
- 2-Ethylhexyl acrylate: CH₂=CH-(CO)-O-CH₂CH(C₂H₅)C₄H₉; molecular weight, 213.5

   [Chem. 4] D^{R³}₄ : [R³R"SiO_{2/2}]₄

   (wherein R³ is CH2=CHCOO(CH2)3- and R" is CH3-); molecular weight, 688; indicated as D^{R3}₄ in the table
- 2-Hydroxyethyl acrylate: CH₂=CH-(CO)-O-CH₂CH₂OH; molecular weight, 116
- 4-Hydroxybutyl acrylate glycidyl ether: a compound of the following formula having an acrylic group on one end and a glycidyl ether group on the other end; 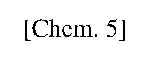 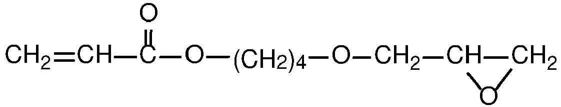
- (Comparative Product) Tricosaethylene glycol diacrylate: a compound having 23 ethylene glycol units; molecular weight, 1,108
- (Comparative Product) Propoxylated ethoxylated bisphenol A diacrylate (10): molecular weight, 1,296
- (Comparative Product) Methyl phenyl polysiloxane: a polysiloxane in which both ends of the molecular chain are capped with dimethylvinylsiloxy groups, the side chains are composed of (CH3)2SiO units and (CH₃)(C₆H₅)SiO units, phenyl groups (C₆H₅) account for 3 mol% of all functional groups, and which has a viscosity of 5,000 mPa.s; weight-average molecular weight, 36,234

   [(CH₃)₃SiO_{1/2}]₂[(CH₆H₅)₂SiO]₁₄[(CH₃)₂SiO]₄₅₀

### Example 1

One hundred parts by weight of methyl vinyl polysiloxane as component (A), 1.77 parts by weight of methyl hydrogen polysiloxane as component (B), 0.2 part by weight of acrylic acid as component (C) and 0.3 part by weight of 1-ethynyl-1-cyclohexanol as component (E) were added together and stirred to uniformity, following which a complex of platinum and vinyl siloxane as component (D) was added in an amount, based on the weight of the platinum atoms, of 100 ppm of the total weight of components (A), (B), (C) and (D) and stirred to uniformity, thereby preparing a composition having a kinematic viscosity of 401 mm²/s and a Si-H/Si-Vi ratio (ratio of Si-H groups in component (B) to alkenyl groups in component (A); the same applies below) of 1.8. When there are no alkenyl groups other than in component (A) and no Si-H groups other than in component (B), the Si-H/Si-Vi (molar ratio) within the composition is the same.

### Example 2

Apart from changing component (C) to 0.5 part by weight of acrylic acid, a composition having a kinematic viscosity of 401 mm²/s and wherein Si-H/Si-Vi = 1.8 was prepared in the same way as in Example 1.

### Example 3

Apart from changing component (C) to 0.5 part by weight of 2-ethylhexyl acrylate, a composition having a kinematic viscosity of 403 mm²/s and wherein Si-H/Si-Vi = 1.8 was prepared in the same way as in Example 1.

### Example 4

Aside from changing component (C) to 0.5 part by weight of D^{R3}₄, a composition having a kinematic viscosity of 403 mm²/s and wherein Si-H/Si-Vi = 1.8 was prepared in the same way as in Example 1.

### Example 5

Aside from changing component (C) to 0.5 part by weight of 2-hydroxyethyl acrylate, a composition having a kinematic viscosity of 400 mm²/s and wherein Si-H/Si-Vi = 1.8 was prepared in the same way as in Example 1.

### Example 6

Aside from changing component (C) to 0.5 part by weight of 4-hydroxybutyl acrylate glycidyl ether, a composition having a kinematic viscosity of 401 mm²/s and wherein Si-H/Si-Vi = 1.8 was prepared in the same way as in Example 1.

### Comparative Example 1

One hundred parts by weight of methyl vinyl polysiloxane (1) as component (A), 1.77 parts by weight of methyl hydrogen polysiloxane (2) as component (B) and 0.3 part by weight of 1-ethynyl-1-cyclohexanol as component (E) were added together and stirred to uniformity, following which a complex of platinum and vinyl siloxane as component (D) was added in an amount, based on the weight of the platinum atoms, of 100 ppm of the total weight of components (A), (B) and (D) and stirred to uniformity, thereby preparing a composition having a kinematic viscosity of 404 mm²/s and wherein Si-H/Si-Vi = 1.8.

### Comparative Example 2

Aside from changing component (C) to 0.5 part by weight of tricosaethylene glycol diacrylate, a composition having a kinematic viscosity of 410 mm²/s and wherein Si-H/Si-Vi = 1.8 was prepared in the same way as in Comparative Example 1.

### Comparative Example 3

Aside from changing component (C) to 0.5 part by weight of propoxylated ethoxylated bisphenol A diacrylate, a silicone release agent composition having a kinematic viscosity of 414 mm²/s and wherein Si-H/Si-Vi = 1.8 was prepared in the same way as in Comparative Examples 1 and 2.

### Comparative Example 4

Aside from changing component (C) to 3 parts by weight of methyl phenyl polysiloxane, a silicone release agent composition having a kinematic viscosity of 440 mm²/s and wherein Si-H/Si-Vi = 1.8 was prepared in the same way as in Comparative Example 1.

The following evaluations were carried out on the organopolysiloxane compositions obtained in the above Examples. The results are presented in the tables.

### Release Force

The organopolysiloxane composition was applied to the metal roller of an RI tester (IHI Machinery and Furnace Co., Ltd.) and uniformly stretched by rotating the two rollers for 45 seconds, after which the composition was transferred from the rubber roller to a polyethylene laminated paper. The polyethylene laminated paper onto which the composition had been transferred was then heated for 30 seconds in a 120°C hot-air dryer, thereby giving a release paper having a 0.9 to 1.1 g/m² thick cured coating of the organopolysiloxane composition. After the release paper was aged 24 hours at 25°C in this state, the solvent-based acrylic pressure-sensitive adhesive BPS-5127 (Toyo Ink Co., Ltd.) was applied onto the cured coating surface of the release paper (the side onto which the composition had been transferred from the rubber roller) and subsequently dried in a 100°C dryer for 180 seconds. After drying, the adhesive-coated release paper was left to stand at room temperature for at least 10 minutes and good-quality paper was then attached thereto, following which test pieces having a size of 5.0 cm × 18 cm were cut from the resulting construction. A load was applied to a cut test piece by passing a 2-kg roller once back-and-forth over it and the test piece was aged at room temperature for 24 hours. One edge of the test piece was then detached, the adhesive-coated substrate end of the tape was pulled at a peel rate of 0.3 m/min in the direction of a 180° angle to the polyethylene laminated paper, and the force required for peeling at that time (i.e., the release force (N/50 mm)) was measured using a tensile testing machine (model AGS-50G, from Shimadzu Corporation).

### Subsequent Adhesion Ratio

Using the same method as described above for the release force, the silicone composition was transferred onto polyethylene laminated paper and cured in a dryer to give a release paper. The release paper was aged at 23°C for 24 hours, after which Nitto 31B tape was attached to the release paper. For the sake of comparison, Nitto 31B tape was similarly attached to a Teflon® plate. Next, the resulting samples were pressure-bonded at 70°C under a 20 g/cm² load and held in that state for 20 hours. Following this, the samples were left to stand at 23°C for at least 30 minutes, after which the tape was peeled away from each sample, attached to a stainless plate and pressure-bonded once back-and-forth with a 2-kg roller. The bond strength was then measured using a tensile testing machine (AGS-50G, from Shimadzu Corporation).

Using the bond strength of the Teflon® plate-attached tape as the blank value, the ratio (%) of the measured bond strength for the test sample with respect to this blank value was treated as the subsequent adhesion ratio (%).

**Table 1**

| Composition (parts by weight) | | Example | | | |
|---|---|---|---|---|---|
| | | 1 | 2 | 3 | 4 |
| (A) | Methyl vinyl polysiloxane | 100 | 100 | 100 | 100 |
| (B) | Methyl hydrogen polysiloxane | 1.77 | 1.77 | 1.77 | 1.77 |
| (C) | Acrylic acid | 0.2 | 0.5 | - | - |
| | 2-Ethylhexyl acrylate | - | - | 0.5 | - |
| | D^{R3}₄ | - | - | - | 0.5 |
| (D) | Complex of platinum and vinyl siloxane | 2.09 | 2.09 | 2.09 | 2.09 |
| (E) | 1 -Ethynyl-1 -cyclohexanol | 0.3 | 0.3 | 0.3 | 0.3 |
| <Concentration based on weight of platinum atoms> (ppm) in total amount of (A) to (D) | | 100 | 100 | 100 | 100 |

| <Physical Properties> | | | | | |
|---|---|---|---|---|---|
| Si-H groups/Si-V groups (molar ratio) | | 1.8 | 1.8 | 1.8 | 1.8 |
| Kinematic viscosity of silicone release agent composition (mm²/s) | | 401 | 401 | 403 | 403 |

| <Release Properties> | | | | | |
|---|---|---|---|---|---|
| Release force (N/50 mm), BPS-5127 | | 0.07 | 0.08 | 0.09 | 0.09 |
| Subsequent adhesion ratio (%), Nitto 31B tape | | 95 | 92 | 91 | 94 |

**Table 2**

| Composition (parts by weight) | | Example | |
|---|---|---|---|
| | | 5 | 6 |
| (A) | Methyl vinyl polysiloxane | 100 | 100 |
| (B) | Methyl hydrogen polysiloxane | 1.77 | 1.77 |
| (C) | 2-Hydroxyethyl acrylate | 0.5 | |
| | 4-Hydroxybutyl acrylate glycidyl ether | - | 0.5 |
| (D) | Complex of platinum and vinyl siloxane | 2.09 | 2.09 |
| (E) | 1 -Ethynyl-1 -cyclohexanol | 0.3 | 0.3 |
| <Concentration based on weight of platinum atoms> (ppm) in total amount of (A) to (D) | | 100 | 100 |

| <Physical Properties> | | | |
|---|---|---|---|
| Si-H groups/Si-V groups (molar ratio) | | 1.8 | 1.8 |
| Kinematic viscosity of silicone release agent composition (mm²/s) | | 400 | 401 |

| <Release Properties> | | | |
|---|---|---|---|
| Release force (N/50 mm), BPS-5127 | | 0.08 | 0.07 |
| Subsequent adhesion ratio (%), Nitto 31B tape | | 93 | 95 |

**Table 3**

| Composition (parts by weight) | | Comparative Example | | | |
|---|---|---|---|---|---|
| | | 1 | 2 | 3 | 4 |
| (A) | Methyl vinyl polysiloxane | 100 | 100 | 100 | 100 |
| (B) | Methyl hydrogen polysiloxane | 1.77 | 1.77 | 1.77 | 1.77 |
| (C) | Tricosaethylene glycol diacrylate | - | 0.5 | - | - |
| | Propoxylated ethoxylated bisphenol A diacrylate | - | - | 0.5 | - |
| | Methyl phenyl polysiloxane | - | - | - | 3 |
| (D) | Complex of platinum and vinyl siloxane | 2.08 | 2.09 | 2.09 | 2.1 |
| (E) | 1 -Ethynyl-1 -cyclohexanol | 0.3 | 0.3 | 0.3 | 0.3 |
| <Concentration based on weight of platinum atoms> (ppm) in total amount of (A) to (D) | | 100 | 100 | 100 | 100 |

| <Physical Properties> | | | | | |
|---|---|---|---|---|---|
| Si-H groups/Si-V groups (molar ratio) | | 1.8 | 1.8 | 1.8 | 1.8 |
| Kinematic viscosity of silicone release agent composition (mm²/s) | | 401 | 410 | 414 | 440 |

| <Release Properties> | | | | | |
|---|---|---|---|---|---|
| Release force (N/50 mm), BPS-5127 | | 0.13 | 0.13 | 0.14 | 0.08 |
| Subsequent adhesion ratio (%), Nitto 31B tape | | 95 | 91 | 90 | 72 |

The Examples according to the invention all achieved a release force of 0.09 N/50 mm or less owing to the addition of component (C).

In Comparative Example 1, in which component (C) was not included, the release force was 0.13 N/50 mm.

When compounds having a molecular weight greater than 1,000 were used as component (C) (Comparative Examples 2 and 3), the release force could not be lowered.

## Claims

1. An organopolysiloxane composition for release paper or release film, comprising components (A) to (D) below:
(A) 100 parts by weight of organopolysiloxane having at least two silicon-bonded alkenyl groups per molecule;
(B) organohydrogenpolysiloxane having at least two silicon-bonded hydrogen atoms (Si-H groups) per molecule, in an amount corresponding to from 1 to 5 moles of Si-H groups per mole of alkenyl groups in component (A);
(C) compound having at least one (meth)acrylic group per molecule and a molecular weight of from 72 to 1,000, in an amount of from 0.01 to 3 parts by weight per 100 parts by weight of component (A); and
(D) platinum group metal catalyst in an amount, based on platinum group metal weight, of from 60 to 300 ppm of the total weight of components (A) to (D).

2. Organopolysiloxane composition for release paper or release film of claim 1, further comprising (E) addition reaction regulator, in an amount of from 0.01 to 5 parts by weight per 100 parts by weight of component (A).

3. Organopolysiloxane composition for release paper or release film of claim 1 or 2, wherein component (C) is organopolysiloxane having at least one (meth)acrylic group per molecule and a molecular weight of from 186 to 1,000.

4. Organopolysiloxane composition for release paper or release film of claim 1 or 2, wherein component (C) is compound having one (meth)acrylic group per molecule and a molecular weight of from 72 to 300.

5. Organopolysiloxane composition for release paper or release film of claim 1 or 2, wherein component (C) is compound having a (meth)acrylic group and an epoxy group.
